# EUROPEAN PATENT APPLICATION

(11) **EP 1 094 683 A1**
(43) Date of publication of application: **25.04.2001**
(21) Application number: 99830667.4
(22) Date of filing: 22.10.1999
(51) Int. Cl.: H04Q 11/04

(54) **Fractional atm cells for low bit rate voice**

(71) Applicant: Italtel s.p.a., 20154 Milano (IT)
(72) Inventor: Gallasi, Giorgio, 20010 Cornardedo (MI) (IT); Morganti, Michele, 20136 Milano (IT); Rigolio, Giancarlo, 21013 Gallarate (VA) (IT)
(74) Representative: Giustini, Delio

(57) **Abstract**

According to the invention, the system employs standard ATM cells divided into fractional segments or fractions, the header of each standard ATM cell is also the header of the first fraction of a divided cell and each successive fraction of the cell has a header structured as a standard ATM cell header. Always according to the invention, the VPI/VCI value contained in a specified location in the header of the first fraction, identifies the ATM connection multiplexing several low-rate sub-flows as well as the sub-flow to which the first fraction pertains to, while the VPI/VCI values contained in a specified location in the headers of the fractions following said first fraction identify only the respective sub-flows of pertinence.

Standard ATM network switches translating the VPI/VCI value of the header of first fraction of the cell to redirect cell and are transparent to the headers of the successive fractions into which the cell is divided;

Customizing circuitry in the form of add-on line interface cards installed in a standard ATM switch providing access the headers of all the fractions of the cell and translating the VPI/VCI values relative to respective sub-flow identifiers.

## Description

### FIELD OF THE INVENTION

Forecast for telecommunication of next future indicates that basically the largest part of voice communication will shift from terrestrial to wireless technology, thus radio communication will rocket impressively. Even if services different from voice ones will be supported, it is expected that in next future the 90% of the wireless traffic will be voice, and only the remaining 10% of the traffic will be generated by other applications. In wireless communication bandwidth is a precious resource. Therefore, the achievement of efficiency in transporting radio packets is a key of success. Not surprisingly, a number of techniques for low bit-rate coding, adapt for radio communication, have been standardized by competent committees in last years; just to mention the most popular, ITU-T has defined CS-ACELP, which produces a bit rate at 8 kbit/s, in recommendation G.729, and its variation ASCELP-MP-MLQ, in G.723 recommendation. ARIB/STD-27. using PSI-CELP algorithms, can obtain even higher compression, down to 4 kbit/s.

ATM technology allows enough flexibility to support low bit rate connection, as well as many other multimedia communications, over a unified transport technology. However, the fixed cell size mandatory in ATM presents a problem: the cell assembly delay increases as the bit rate decreases, thus packet delay can exceed service requirement.

### BACKGROUND ART

The problem of reducing the cell assembly delay for low bit rate coding has been recently assessed jointly by ITU and ATM-Forum, which have reached a finalization with the standardization of the new AAL type 2.

By means of this solution, multiple voice channels can be multiplexed in one single ATM connection. AAL2 concerns itself with voice data packet and gives a standard method to encapsulate them within ATM cells. Voice data packets contain a unique voice channel identifier that allows recognizing each single voice channel within the ATM connection.

Radio packets can span over more than one ATM cell. Should a voice packet not exactly fit the empty portion of an ATM cell payload, the initial part of a voice packed can be used to fill up the available space, and the remaining portion of the broken packet will be included in the payload of the next cell of the ATM connection. AAL2 defines a system of length indicators and offset pointers to allow correct packet delineation within the ATM cell sequence and to guarantee recovering from error and packet corruption events. These features make AAL2 appropriate for use with wireless transmission.

Since its specification, a number of implementations of AAL2 have appeared.

The document WO 98/37728, by Northern Telecom describes an AAL2 compatible adaptation layer switching technique.

In order to achieve voice packet multiplexing/demultiplexing function, the specific AAL2 functionality is required at any point of the network where such a flexibility is desired. However, AAL2 is quite a complex functionality, which requires both buffering and processing resources.

Alternative approaches have been proposed in an attempt to reduce cell packetization delay, but at the same time to overcome the AAL2 limitations. An interesting approach is described in US Patent No. 5,805,588, assigned to Ericsson. This disclosure concerns a circuit emulation service, based on the use of frames of configurable size (selected from a list of allowed sizes), called PR-PDU, which, depending on the frame size chosen, may indifferently include or be included within ATM cells. The structure of the PR-PDU is defined as a proprietary four-byte header and a variable size payload.

However, such a technique requires dedicated and specialized equipment to handle the proprietary header coding and the switching of these peculiar frames.

### OBJECT AND SUMMARY OF THE INVENTION

The main objective of the present invention is to provide for an ATM system capable of offering an efficient support of low bit-rate coding transport without requiring a general modifications of network ATM switches, but only the equipping with relatively simple add-on line cards of the switching installations that wish to exploit the enhanced efficiency of the restructured ATM cells, according to the invention. In practice, the modified ATM cells according to the invention remain normally handled by standard ATM switches and travel seamlessly through the network. Only upon reaching an equipped switching location they are discriminated according to their special structure and properly directed to the customized destination. Low bit-rate flows are switched in conventional ATM switching equipments equipped with properly specialized line cards: all the needed customization is in fact confined to line cards, leaving the ATM switching and control capabilities of the installation unaffected, assuring fullest compatibility of the system of the invention with existing ATM equipment (obviously without the ability of exploiting the peculiar advantages of the invention).

The ATM cell structure and in particular the 5+48 bytes structure is maintained.

The approach on which the system of the invention is based, is that of permitting subdivision of a standard ATM cell in segments or «fractions» of a certain length. For example into «binary» fractions, for example of ½ or of ¼ of the total length, or in «ternary» fractions, for example of 1/3 of the standard 5+48 byte ATM cell length.

The user data coming from a number of flows can be multiplexed within standard cells of an ATM connection and, according to this invention, each flow can selectively use a sub-cell of ¼, 1/3 or ½ ... or else exploit the full size of the standard ATM cell, according to need.

Each of these fractions is organized in one 'header' and one 'payload' portion. The header of the sub-cells (or fractions) is defined in a fully consistent manner with the 5 bytes standard ATM header, thus permitting the use of existing ATM processing HW machines.

Access equipment take care of composing these special fractional cells practically encapsulated into a standard ATM cell frame.

The invention is clearly defined in appended claim 1 and particularly effective embodiments are defined in the remaining claims 2-14.

### BRIEF DESCRIPTION OF THE DRAWINGS

**Figure 1** is a schematic illustration of the multiplexing of several flows using fractional cells within a standard ATM connection.

**Figure 2** shows the organization of binary fractional cell frames.

**Figure 3** shows a partial filling of the payload of a binary fractional cell.

**Figure 4** depicts examples of sub-cell allocation within a standard ATM cell.

**Figure 5** depicts examples of cell structure maps.

**Figure 6** depicts examples of cell frame map byte coding.

**Figure 7** shows a ternary fractional cell organization.

**Figure 8** illustrate the control bytes coding.

**Figure 9** depicts the re-sizing to internal frame structure of a non standard cell size.

**Figure 10** is a scheme of the switching of fractional length ATM cells of the system of the invention.

**Figure 11** is a diagram of a standard line interface of a generic ATM switch.

**Figure 12** illustrate the scheme of fractional cell re-aligning functionality in an upstream direction.

**Figure 13** illustrate the scheme of fractional cell re-aligning functionality in a downstream direction.

### DESCRIPTION OF EMBODIMENTS OF THE INVENTION

### Multiplexing several sub-flows within one A TM connection

According to the invention, an ATM connection multiplexes several sub-flows by utilizing sub-cells. As mentioned previously, and as will appear clearer in the following description, the header of the standard ATM cell is also the header of the first of the many fractions the cell is subdivided into.

The header of each fraction is coded exactly like a standard ATM header.

The VPI/VCI value contained in the header of the first fraction has therefore a twofold meaning: is the identifier of the ATM connection multiplexing several low-rate sub-flows, and at the same time is the identifier of the sub-flow carried in the first fraction of the standard ATM cell.

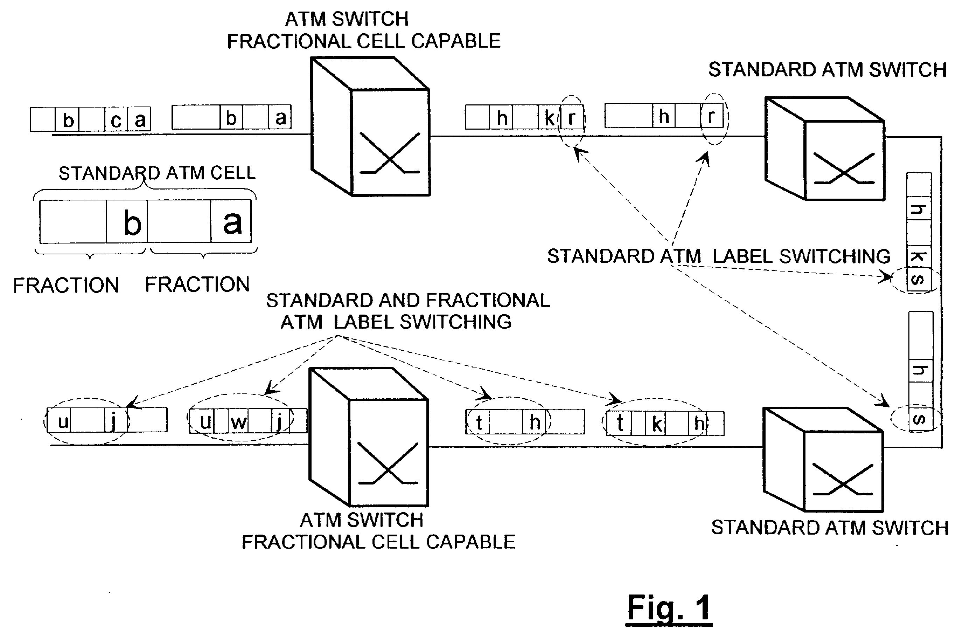

Accordingly, this VPI/VCI value will be normally translated by the standard ATM equipment it crosses as schematically depicted in Fig. 1 in which only the ATM cell labels «r» is switched in the position «s» by the standard ATM switch.

By contrast, the VPI/VCI values of the headers of the internal fractions pass transparently and are accessed only by switches implementing the particular customized system of the invention. Always in Fig. 1, the ATM cell labels of the internal fractions «t», «k» and «h» are switched in the positions «u», «w» and «j» by the ATM switch fractional cell capable.

According to the above, only ATM cell label is switched by standard equipments, whereas both standard ATM cell label and fractional label are switched by fractional cell capable equipment.

Division of standard ATM cell in fractions of equal length may be done in different ways. Preferred alternative ways of dividing the cell, are described hereinbelow.

### Binary fractional A TM cells

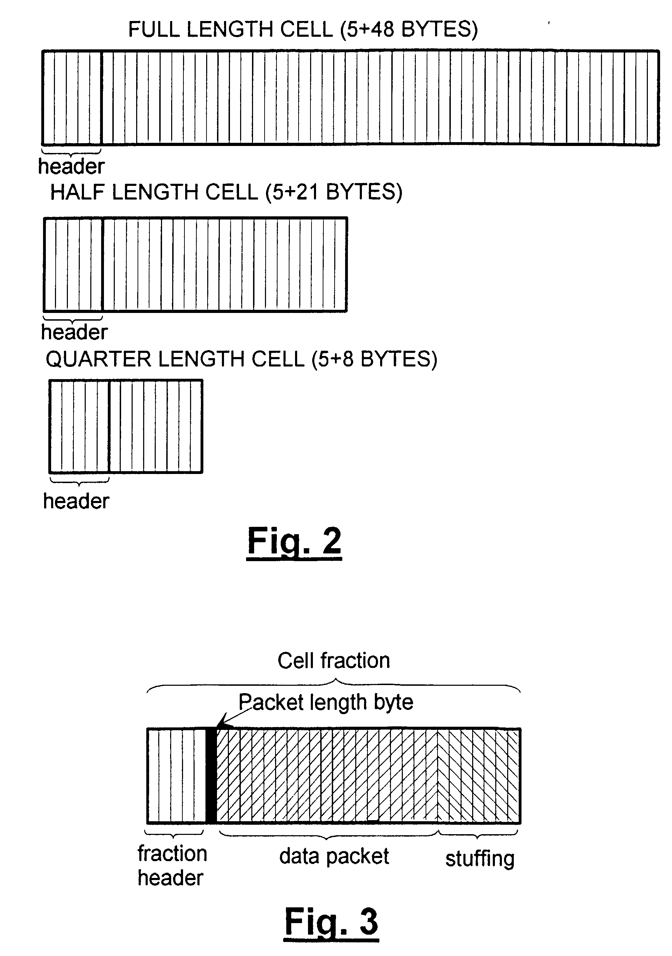

Fig. 2 illustrates the case of a «binary» segmentation of a standard cell.

Within each of the sub-cell fractions obtained by organizing the standard ATM cell frame according to the invention, radio packet coming from low bit-rate voice coding, or more in general small packets generated by whichever low bit-rate coding, can easily fit.

The size of these packets can be of any value, and the packet can be accommodated in the smallest «container» obtained from the fractional partitioning of the standard ATM cell frame whose size is adequate to contain the packet. Preferably, the first byte after the header of an «internal» fraction of cell will always contain the field of payload length (packet length byte), and, should the packet not exhaust completely the payload capacity of the fraction (container), the remainder will be filled with stuffing bytes.

Fig. 3 depicts such a situation.

These sub-structures or fraction fit into the standard ATM cell frame. In principle, the 5+48 bytes sequence of a standard ATM cell may be subdivided in **four** sections of **5+8 bytes**, completed with **one final byte** carrying the coding of the cell organization, *named 'cell frame map'* (CFM) byte, whose coding will be detailed later in this section. Up to three 1/4 segments can be merged to create a larger segment of size 1/2 or 3/4. Accordingly, the structure of a standard ATM cell can be organized in sub-cells (header+payload) as follows:
- *four* sub-cells, consisting of 5+8 bytes each (4 x ¼ fractions)
- *two* sub-cells, consisting of 5+21 bytes each (2 x ½ fractions)
- *two 5+8* sub-cells and *one* 5+21 sub-cell (2 x 1/4 plus 1x 1/2 fraction)
- *one* 5+8 and *one* 5+34 sub-cells (1 × ¼ plus 1 × ¾),

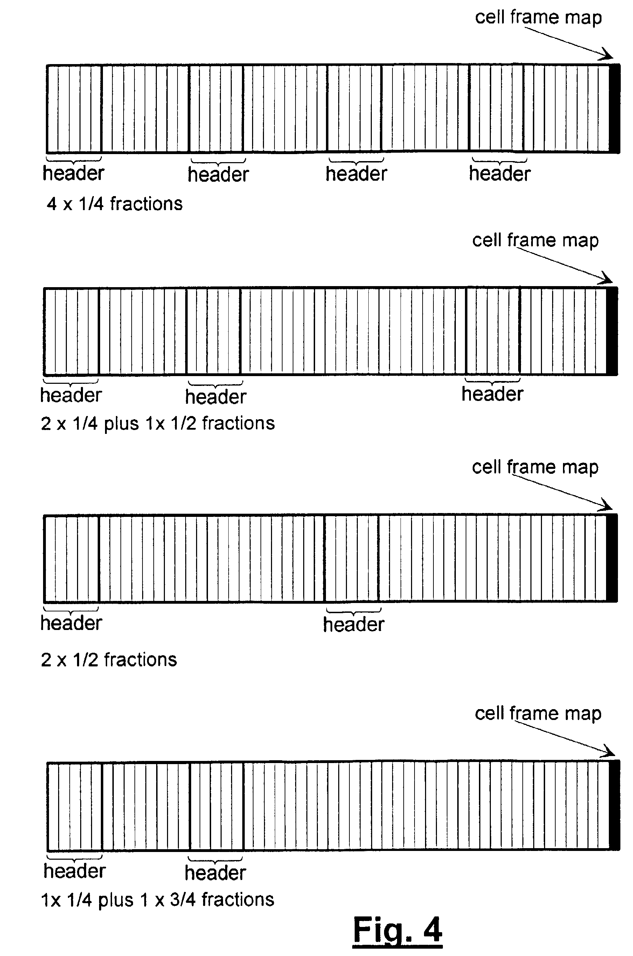

These possibilities are schematically depicted in Fig. 4.

The first header must correspond to a standard header of a standard ATM cell. Internal headers appear only when the sub-cells they refer to are actually being used.

### Cell frame map for binary fractional frame structure case

The closing byte of the standard ATM cell structure is a *cell frame map* (CFM) byte. Its purpose is to code the actual organization of the ATM cell, specifying how many «containers» (or sections) there are, their size, and their significance (that is whether they are filled with user data or are empty containers).

As far as the CFM byte is concerned, the ATM cell is always logically supposed as organized in four «sections» of size ¼. The CFM byte is logically split into two parts of four bits each:
- the first four bits indicate the actual organization of the «containers» in the ATM cell;
- the latter four bits explain if the containers are in use (i.e. filled with significant user data) or empty;
for each four-bit field, the first bit refers to the first ¼ segment, the second bit to the second ¼ segment, and so forth.

### Cell structure map (first four bits of cell frame map byte)

Each bit in this field 'points' to one of the potentially present ¼ sections in the ATM cell. The bit is «1» if the segment is an ¼ size independent container or if it is the first part of a larger container (½, ¾). In this case, the initial 5 bytes group of the section it refers to (1-5, in case of bit one, 14-18 in case of bit two, and so on) host the header of the fraction. The bit is «0» if the ¼ section it refers to is merged with the previous section, and therefore the would be internal-header bytes are available for the payload of the larger container so obtained.

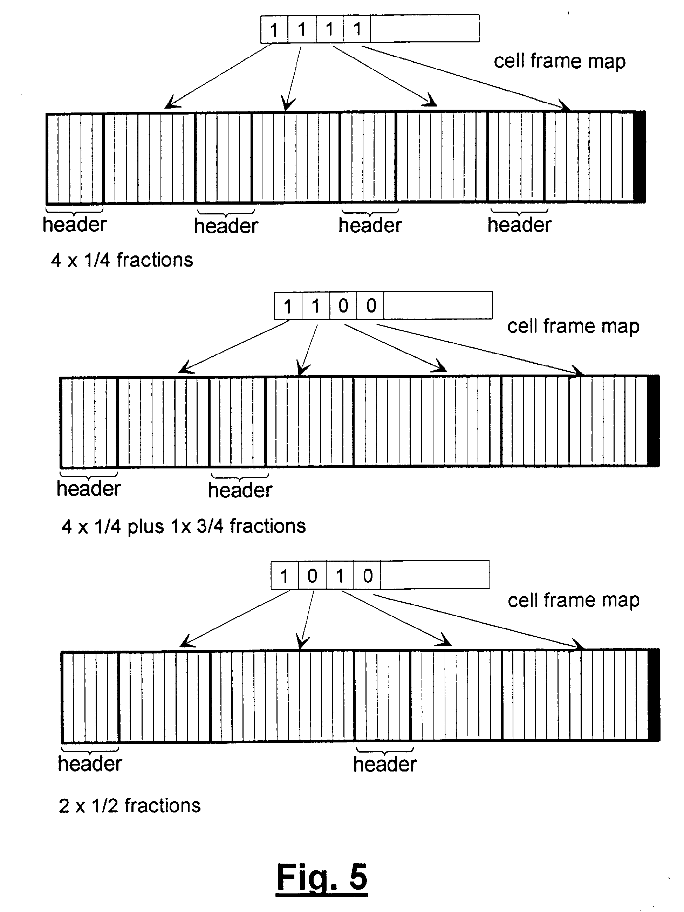

Fig. 5 shows the coding of the first part of the frame map byte for different situations. Obviously, the first bit must always to be a «1», as it refers to the standard ATM cell header, which is always used, independently or as first part of a larger fraction.

### Fraction usage (last four bits of cell frame map byte)

Once clarified, by means of the first four bits of the CFM byte, how the standard ATM cell frame is organized in fractional containers, it is necessary to code whether or not the containers are in use.

In fact, due to fractional cell assembly/disassembly function within customized ATM switches, «fractional cell capable», it may happen that one (or more) of the containers within the cell remains occasionally empty.

The remaining four bits group within the CFM byte covers this need.

As for the other four bits group just described, each of these bits «points» to a specific 1/4 potentially present section within the standard ATM cell frame.

The bit is «1» if the 1/4 section contains valid used data otherwise it is «0».

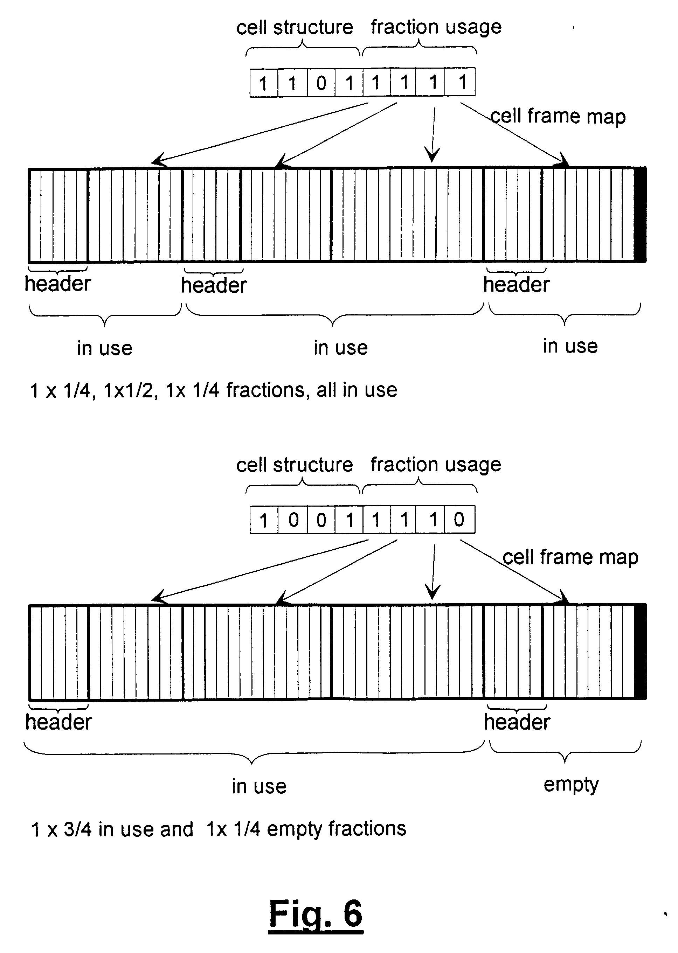

These bits always refers to the ¼ section, even if the ¼ section is not an independent one, but is merged in a larger container. Thus, for example, a ½ container in use (i.e. filled with user data) will generate two consecutive «1» bits in this part of the CFM byte. Fig. 6 shows a two examples of complete coding of the CFM byte.

### Ternary fractional A TM cells

An alternative scheme of partitioning may rely on a ternary subdivision of a standard ATM cell in fractions of equal length. In this case, each section has a size equal to 1/3 of the standard ATM cell size, and in this particular scheme the cell is structured in **three 5+12 bits size sections** plus **two control bytes.**

As in case previously described, the same structure of the standard ATM cell header is retained for each of the internal fractions. In particular the header of the first fraction of the cell is also the standard ATM header of the whole ATM cell.

This cell format represents a particularly convenient solution for supporting one of the most diffused coding scheme for low bit-rate voice today available, the CS-ACLEP at 8kb/s. This coding scheme in fact generates frames of 10 bytes size every 10 ms, which can be easily accommodated within the 12 bytes payload of the 1/3 fraction, allowing also for two spare bytes, usable for redundancy codes of error control over the packet transmission.

For this reason, in this ternary fractional approach it is preferable not to allow merging of fractional segments within the cell. The cell frame subdivision in «frozen» in 3 sections of 5+12 bytes each, with the two control bytes, named A and B, summing up to 53 bytes, completing the standard ATM cell size. Control byte A corresponds to the byte 18 of the standard ATM cell, immediately following the first cell fraction, while control byte B is the byte 36, following the second fraction.

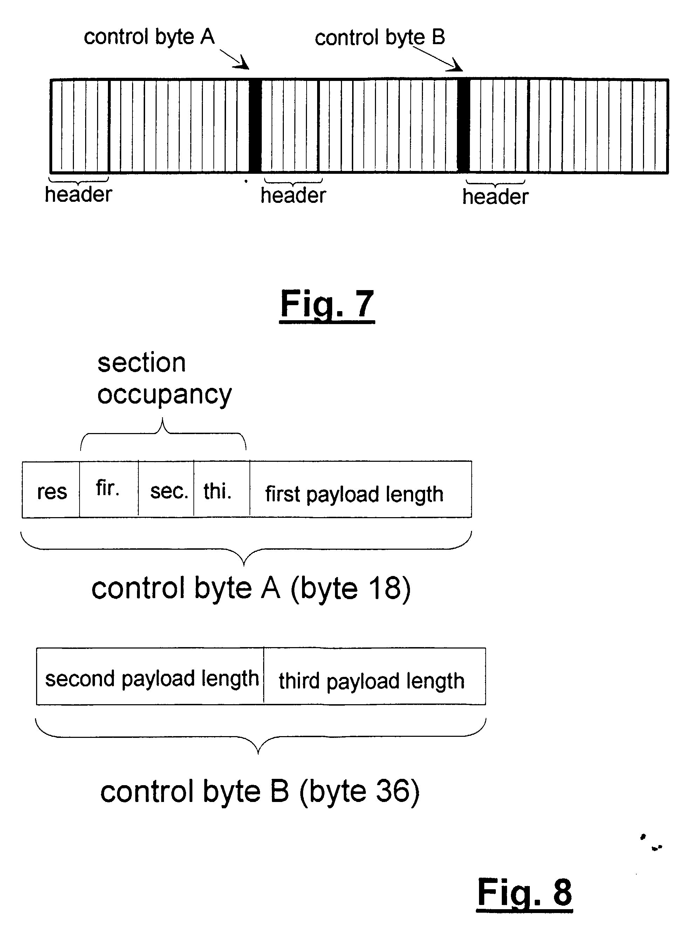

Fig. 7 shows the position of the fractions and of the control bytes within the ATM cell frame.

### Control bytes coding

The 16 bits made available by the two control bytes of the ATM cell, that is byte 18 and byte 36, are used to code the usage or each section and the length of the packets hosted in each of the three sections composing the ATM cell, as shown in Fig. 8.

Control byte A is organized in 5 fields, four fields of one bit size and one field of four-bit size. The first one-bit field bit is reserved for future use, the next three one-bit fields, inform on the actual usage of the 1/3 sections within the cell: if set to «1», indicate that the section payload they refer to, as shown in Fig. 7, is filled with user data, information.

Thus, once received, the first 18 bytes of the cell, information of its organization are already available in any suitably customized fractional cell capable equipment. In addition, within Control Byte A, the following group of four bytes gives the packet length of the content of the 12 bytes payload of the first section.

Control Byte B is organized in two fields of four four-bit sizes each. Each of these fields gives the packet length of the content of the 12 bytes payload of the second and third sections.

The payload length fields in Control Bytes A and B only refers to the 12 bytes payload, and do not include the 5 bytes fraction header.

### Switching fractional A TM cell

Fractional cell solution is used to multiplex a number of low-rate sub-flows within a single standard ATM connection apparent on the trunk lines.

Within fractional cell capable switching installation the single sub-flows are resumed for appropriate switching. Specialized (custom) functionality is required in the fractional cell capable switching installations to de-multiplex the single sub-flows aggregately carried by the ATM connection, to allow independent switching of the single sub-flows.

A standard ATM switch can be profitably upgraded (customized), in some or all the external interfaces as needed, to handle fractional size ATM cell. Advantageously, assuming a switch architecture based on a number of external interface cards interconnected by a switch fabric, all the modifications may be confined to the external line card interfaces, keeping the rest of the functionality of the switch unchanged. This allows for a **hybrid switch configuration**, where a mix of standard and fractional ATM interfaces can be handled.

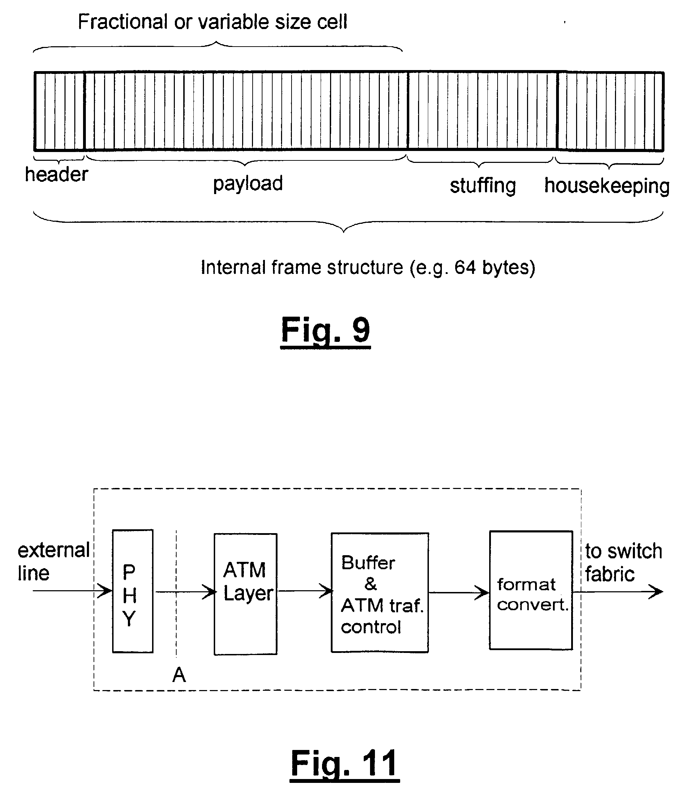

Upon reception, special line cards designed to handle fractional size cells, fill with stuffing bytes as depicted in Fig. 9, an incoming cell up to the standard frame size as accepted by the switch, and then forward this data structure to the ordinary functional circuitry available in the switch for storing and switching, exactly like any standard ATM cell.

Similarly, on egress side, after updating the header information consistent with the implemented switching, the internal structure encapsulation is stripped, and the original non-standard size cell is recovered and transmitted.

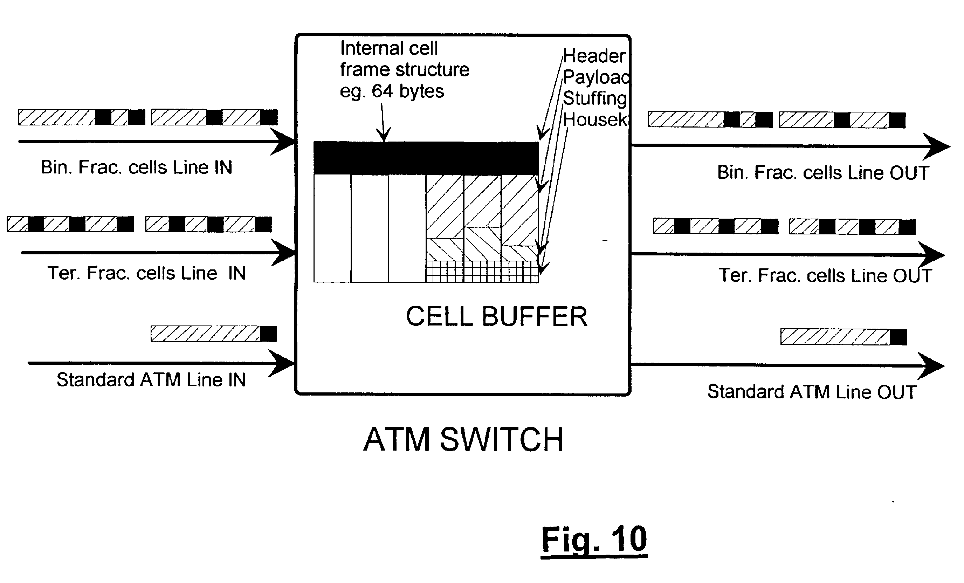

The complete process is synthetically shown in Fig. 10. In this figure is also clearly shown that in specialized interfaces of a switch for fractional (ternary or binary) cells coexist with standard ATM line interfaces; all sharing the core switch functionalities. Each interface is specialized either for binary-fractional or ternary fractional or standard (unpartialized) ATM cell handling.

All the non-standard cell structure described above retain the first cell header exactly in the same form of an ordinary ATM cell, thus all the operations on the first header can be performed by usual HW/SW modules implementing standard ATM functionality. In addition, this allows the use of normal ATM signaling, node control, configuration and management modules also for non-standard cell size connections, in total and complete synergy with standard ones.

In the case of binary or ternary fractional cells, the fractional containers, once recognized and extracted from the standard ATM cell arriving on an external line, have to be encapsulated in the (proprietary) internal structure as expected by the switch, to be handled by ordinary functionality of the switch as any standard ATM cell.

### Line interfaces for fractional cell

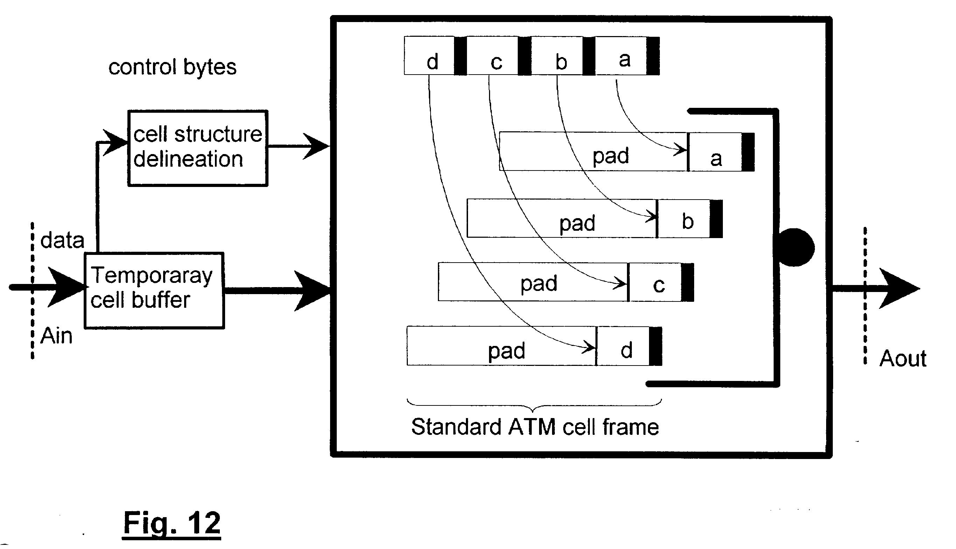

Fig. 11 shows a basic diagram of a standard line interface of a generic ATM switch (intended as a switch fabric surrounded by an array of line interface cards).

At point A, the incoming standard ATM cell is available for decomposition in the fractions it carries. Functionalities available in the line interface from this point A can be profitably applied also on each of the fractional cells, provided that they are resized to standard ATM frame size as normally expected by these functional modules.

Therefore, it is clear that additional functionality have to be located across reference point A to restore standard ATM cell format in order to exploit the existing functional blocks present on the line card.

### Upstream direction

Fig. 12 illustrates the principle of adaptation in the upstream direction only (from the external line toward the switch). The incoming cell of standard size is temporary hosted in a temporary cell buffer. On the basis of the analysis of the control byte(s) included in the cell (last byte in case of binary fraction, bytes 18 and 36 in case of ternary cells), it is possible to identify number and size of'valid' fractions (e.g. actually in use, excluding empty ones) hosted by the incoming ATM cell, by means of cell structure delineation unit.

Padding each structure with stuffing bytes the data frame can be re-aligned to the standard ATM cell frame size. Empty fractions possibly included in incoming cells are obviously discarded before this operation.

By means of a simple FIFO egress buffer, the re-aligning functionality guarantees that the sequence of the fractions is maintained.

After this operation, from point Aout onward, the original cell is split in (up to) four cells, and the standard ATM header of all the fragments is available in the first bytes of the resized standard cells so created.

Therefore, form this point on, standard functionality on the line cards and in the switching matrix can be exploited.

In particular, the VPI/VCI values are now accessible and significant within the switch, each associated with one specific sub-flow multiplexed within the ATM connection.

It is important to note that this architecture implies an «expansion» of the incoming traffic: in the worst case, an incoming cell contains four ¼ size valid fractions, as shown in Fig. 12, thus four cells are forwarded toward the switch fabric. In order to support this application a speed advantage of up to a factor of four is required. This can be obtained with any of the commonly employed techniques (e.g. by spatial expansion or by actually imposing an increase of the internal processing speed of the switch hardware).

### Downstream direction

An inverse processing is done in downstream direction (from the switch toward external line).

As soon as a cell in internal standard format is received onto the line card, the padding bytes have to be eliminated, and the fraction only recovered and queued for appropriate transmission. The cell is hosted in a temporary buffer, and specialized functionality are in charge to determine the actual size of the fraction.

Binary fractional cells might be ¼, ½, or ¾ of a standard ATM cell size. By referring to the structure shown in Fig. 3, packet length information is available in the first byte of the binary fractional cell payload.

The value contained in the payload length byte refers to the actual size of valid user information. Among the fraction sizes available from the fragmentation scheme, the size immediately larger that the actual packet size is chosen. Thus, the size of the fractions is univocally determined from the payload length information extracted by the fraction cell payload unit.

Ternary fractions are always 1/3 the standard ATM cell size (merging of ternary fractions is not allowed), therefore fraction size is always known and no need exist to determine it for cell composition.

Once defined the appropriate fraction size, the valid bytes (up to the fraction size) are retained and the padding ones eliminated. The fraction so obtained, by means of the fractional cell extraction unit, is ready for queueing.

Per sub-flow queues are foreseen on the line card in the downstream direction; fractions are queued in sequential order as received from the switch fabric, guaranteeing in this way the correct sequence within each sub-flow.

Given that a bundle of many sub-flows is combined (multiplexed) into one standard ATM connection; fractions from these sub-flows must be allocated into a standard ATM cell structure. A particular sub-flow exists in each bundle that is identified and used to multiplex all the sub-flows of the bundle.

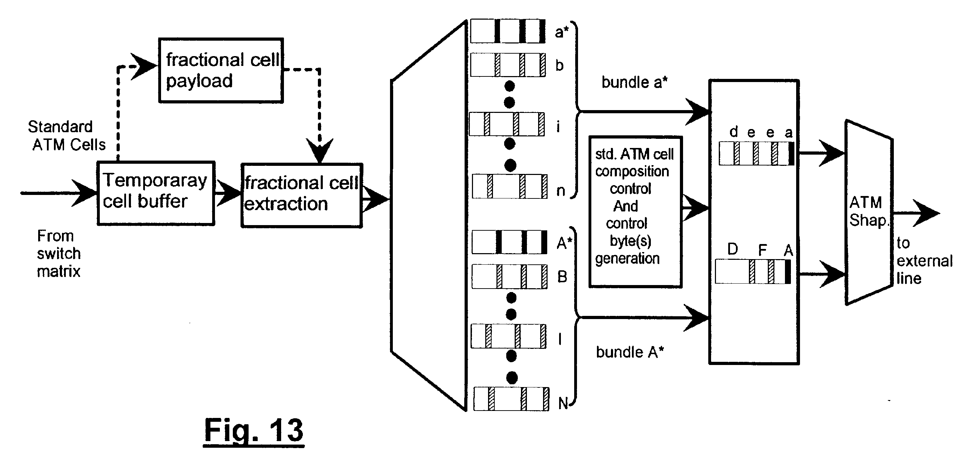

In the following description, and in Fig. 13, these special sub-flows of each bundle of sub-flows are identified with a star mark '∗'.

Packets from this sub-flow will always occupy a first fraction of outgoing cells (and possibly, also other slots).

The header, and in particular the VPI/VCI value of the first fraction allocated into an outgoing ATM cell has a double meaning, for the sub-flow (the `*' sub-flow) and for the multiplexing connection. In particular, any standard ATM node the cell crosses switches this header (see Fig 1).

As soon as a fraction from a ^{`∗'} virtual circuit is available, the logic of the line interface card starts creating a new standard ATM cell for that connection, internally organized in fractions as previously described.

Potentially, one cell for each sub-flow bundle can be contemporary under construction in the temporary cell buffer depicted on the right of Fig. 13.

For each bundle of sub-flows, a specific functionality is in charge of selecting, according to a specific policy, the segment eligible for inclusion in the cell under construction, choosing among all those head of the line in all the per sub-flow queues of the bundle.

Once a cell in the temporary buffer is completed, the control bytes are coded consistently and inserted in the cell. The cell is then passed to the rest of the (ordinary) functionality over the line board, for transmission.

Occasionally, should the size of all the fragments head-of-the-queue of each per sub-flow queue exceed the available empty portion remaining on the cell under construction, the cell is sent incomplete (i.e. with empty portions).

Cells with empty sections can also be originated by lack of user information ready to be transmitted (queue starvation of other sub-flows beside the «^{∗}» one) or by any combination of these two factors.

The policy adopted to select which of the per sub-flow queue is to be served may be different, spanning from simple round-robin (RR), to weighted RR (with service rate proportional to sub-flow rate), to an ordinate search for a fragment better fitting the available empty portion of the cell under constriction. The system of the invention may accommodate in principle any reasonable and appropriate selection policy.

Generally, it would be appropriate to appoint as '*' connection, among those constituting a bundle, the sub-flow with the higher rate (thus with the higher probability to have such a fragment at the time a new cell has to be constructed) with the smallest fragment size (thus to leave large empty portion in each new standard cell available for other sub-flows of the bundle).

## Claims

1. A telecommunication system with reduced latency of low bitrate coding transport over ATM cells heaving a payload field and an header field including in a specific location a Virtual Path Identifier/Virtual Channel Identifier, hereafter labeled VPI/VCI, characterized in that it employs standard ATM cells divided into fractional segments or fractions, the header of each standard ATM cell is also the header of the first fraction of a divided cell and each successive fraction of the cell has a header structured as a standard ATM cell header; the VPI/VCI value contained in a specified location in the header of the first fraction, identifies the ATM connection multiplexing several low-rate sub-flows as well as the sub-flow to which the first fraction pertains to, while the VPI/VCI values contained in a specified location in the headers of the fractions following said first fraction identify only the respective sub-flows of pertinence;
standard ATM network switches translating the VPI/VCI value of the header of first fraction of the cell to redirect cell and are transparent to the headers of the successive fractions into which the cell is divided;
customizing circuitry in the form of add-on line interface cards installed in a standard ATM switch providing access the headers of all the fractions of the cell and translating the VPI/VCI values relative to respective sub-flow identifiers.

2. The telecommunication system according to claim 1, wherein said fractions are defined by dividing the total length of a standard ATM cell into binary fractions (½, ¼).

3. The telecommunications systems according to claim 1, wherein said fractions are defined by dividing the length of a standard ATM cell into ternary fractions (1/3).

4. The telecommunication system of claim 2, wherein smaller binary segments are merged into a larger binary segment, depending on the sizes of data packets to be transmitted.

5. The telecommunication system of claims 2 to 4, characterized in that a well identified byte after the header of an «internal» fraction of cells will always contain the field of payload length.

6. The telecommunication system of claim 5, characterized in that should the packet not exhaust completely the payload capacity of the fraction, the remainder will be filled with stuffing bytes.

7. The telecommunication system according to claims 2 or 4, wherein the last byte of a standard ATM cell structure is a control byte, provides coded information on the actual subdivision of the cell into fractional segments by way of the first four bits and coded information on whether the single fractional segments contains significant user data or not by way of the remaining four bits.

8. The telecommunication system according to claim 7, characterized in that each of said first four bits:
• has a first logical value if the relevant segment is an ¼ size independent container or if it is the first part of a larger container (½, ¾), and
• has a second logical value if the ¼ section it refers to is merged with the previous section,
and each of said last four bits:
• has a first logical value if the ¼ section it refers to contains valid user data, and
• has a second logical value if the ¼ section it refers to is empty.

9. The telecommunication system according to claim 3, wherein the standard ATM cell includes two control bytes, the first corresponding to the 18^{th} byte of a standard ATM cell frame and the second corresponding to the 36^{th} byte of a standard ATM cell frame, each of said two control bytes providing coded information on the utilization of each of the three fractions in which is divided a standard ATM cell.

10. The telecommunication system according to claim 9, characterized in that:
• the first control byte of said two control bytes is organized in four fields of one bit size and one field of four bit size: the first one bit field being reserved for future use and the next three one bit field being used to inform on the actual usage of the 1/3 section within the cell, the field of four bit size being used to inform on the packet length of the content of the 12 bytes payload of the first section;
• the second control byte of said two control bytes is organized in two fields of four bit size each, the first field being used to inform on the packet length of the content of the 12 bytes payload of the second section, the second field being used to inform on the packet length of the content of the 12 bytes payload of the third section.

11. The telecommunication system according to any of the preceding claims, comprising customized switching installations handling standard and fractional ATM cells, characterized by the use of customized line interface cards including circuitry adapted:
• to analyze the control byte(s) included in the cell and to identify number and size of valid fractions hosted by the incoming ATM cell, and
• to construct with each fractions containing useful user data a standard ATM by adding stuffing bytes to the fractions, the header of the fraction becoming the header of the so reconstructed ATM cell of standard size which is thereafter processed by standard ATM switching equipment as normal ATM cells.

12. A telecommunication system according to claim 11 characterized in that said customized line interface cards including circuitry also adapted to perform in downstream direction an inverse processing of the reconstructed and switched ATM cells and in particular adapted to:
1 appropriately discard the padding bytes of any ATM cell received from the switch matrix, in order to recover the valid cell fraction in it contained;
2 create per each subflow a dedicated queue of fractions, ordered sequentially as received from the switching fabric, to garantee the correct sequence within each sub flow; said per sub-flow queues are organized in bundles which are carried by one standard ATM connection each, said ATM connection being associated to a particular sub flow existing in each bundle identified and used to multiplex all the subflows of the bundle;
3 create, starting with available fraction queueing in the known queue of the bundle used to multiplex fractions from all sub-flows belonging to the bundle, standard ATM cells, by filling remaining spare payload of the standard ATM cell with fractions taken head of the queue from other per sub-flow queues of the boundle, according to a predetermined policy;
4 code the control byte(s) of the cell consistently to what above explained;
5 forward such standard ATM cell to the remaining standard circuitry for transmission according to the characteristics of the multiplexing ATM connection.

13. The telecommunication system as claimed in claim 12, characterized in that in said step 3. containers are leaved exceptionally empty should the other queues of the bundle starve or the available fractions sizes not fit the empty space;

14. The telecommunication system according to any of the preceding claims, comprising on the customized line interface cards a specialized fragment selection policy, characterized by the capability to optimally choose, among the head of the line fragments queueing in the per sub-flow queues of each boundle, the segments with the appropriate size to be inserted in the ATM cell of standard size under construction for each boundle.
